# EUROPEAN PATENT SPECIFICATION

(11) **EP 2 907 858 B1**
(45) Date of publication and mention of the grant of the patent: **19.04.2017**
(21) Application number: 14840923.8
(22) Date of filing: 09.07.2014
(51) Int. Cl.: C09J 7/02, B32B 5/18, B32B 27/00, C09J 107/00, B65B 41/12, B32B 7/12, B32B 7/06, B32B 25/04

(54) **PRESSURE-SENSITIVE ADHESIVE TAPE SUITABLE FOR APPLICATION TO WATER-REPELLENT SURFACE**
HAFTKLEBEBAND ZUR ANWENDUNG AUF WASSERABWEISENDEN OBERFLÄCHEN
RUBAN ADHÉSIF SENSIBLE À LA PRESSION APPROPRIÉ POUR UNE APPLICATION SUR UNE SURFACE HYDROFUGE

(30) Priority: 30.08.2013 JP 2013180221
(43) Date of publication of application: 19.08.2015
(73) Proprietor: Toyo Aluminium Kabushiki Kaisha, Osaka-shi, Osaka 541-0056 (JP)
(72) Inventor: OE, Hiroshi, Osaka-shi Osaka 541-0056 (JP); NISHIKAWA, Hiroyuki, Osaka-shi Osaka 541-0056 (JP); YAMADA, Kazunori, Osaka-shi Osaka 541-0056 (JP); SEKIGUCHI, Tomonobu, Osaka-shi Osaka 541-0056 (JP); TERASAWA, Yuya, Osaka-shi Osaka 541-0056 (JP)
(74) Representative: Nieuwenhuys, William Francis
(86) International application number: PCT/JP2014/068307
(87) International publication number: WO 2015/029609

(56) References cited:
- EP-A2- 0 306 232
- JP-A- H0 195 175
- JP-A- 2010 184 454
- US-A- 3 932 328
- US-A- 5 028 646

## Description

### Technical Field

The present invention relates to an adhesive tape used for bonding to packaging materials (containers, lids, bags, etc.) for accommodating foods, medical supplies, cosmetics, chemical products, etc. More specifically, the present invention particularly relates to an adhesive tape used for bonding to a water-repellent surface of a packaging material, the water-repellent surface of which has a contact angle with pure water of 140 degrees or more so as to prevent the adhesion of the content to the packaging material.

In the present invention, "bonding to packaging materials" includes an embodiment of the adhesive tape used for bonding to the water-repellent surface of a stock roll of packaging material (in a coil shape) in a production line for producing packing items (packages).

### Background Art

When packing items containing relatively high-viscosity foods, medical supplies, cosmetics, chemical products, or the like, are opened and used, the contents of the packing items may adhere to the packaging materials and contaminate the hands, or all of the contents may not be completely used (eaten).

Meanwhile, as packaging materials that prevent their contents from adhering thereto when the packaging materials are opened or used, PTL 1 and PTL 2 disclose packaging materials having a contact angle with pure water of 140 degrees or more, in which hydrophobic oxide particles, such as hydrophobic silica having a trimethylsilyl group, are attached to the contact surface with the contents of the packaging materials. Adhesive tapes with a plurality of tackifying resins are disclosed in EP0306232.

For example, when the above packaging material is employed in a lid material for a yogurt container, the yoghurt does not adhere to the rear surface of the lid material when the container is opened. Moreover, when the packaging material is employed in the body of a yogurt container, the yoghurt is less likely to adhere to the side and bottom of the container while eating the yoghurt. Even if the yoghurt adheres to the side or bottom of the container, the yoghurt is immediately repelled. Thus, the yogurt can be cleanly eaten.

Such packaging materials (containers, lids, bags, etc.) having a water-repellent surface are produced by processing (cutting, molding, punching, etc.) a stock roll of packaging material wound in a coil shape while continuously drawing out the stock roll in a production line; however, in the present circumstances, the production line has to be stopped when the used-up coil of stock roll of packaging material is replaced with the next coil.

Basically, it is desirable in terms of efficiency to continuously supply stock rolls of packaging material in a production line while bonding the rear end of a coil being drawn and the front end of the next coil with an adhesive tape. However, sufficient adhesion cannot be obtained by using general, commercially available adhesive tapes or industrially available adhesive tapes because at least one side of the stock roll of packaging material is a water-repellent surface.

In particular, to bond the rear end of a coil and the front end of the next coil without stopping the production line, it is necessary to bond stock rolls of packaging material by an instantaneous slapping motion; however, there are no adhesive tapes that ensure sufficient adhesion even by such a motion.

Although different from industrial adhesive tapes, insect-capturing adhesive sheets (e.g., flypaper sheets) have a soft adhesive, and supposedly can be bonded to water-repellent surfaces; however, the adhesive adheres to cutters during processing (cutting, punching, etc.) of stock rolls of packaging material, impairing the sharpness of the cutters. Further, their bonding strength is low. For this reason, insect-capturing adhesive sheets are not suitable for the above continuous production.

Accordingly, there is a demand for the development of adhesive tapes that ensure sufficient adhesion to a water-repellent surface having a contact angle with pure water of 140 degrees or more even by an instantaneous slapping motion, and that prevent their adhesives from adhering to cutters during processing (cutting, punching, etc.).

### Citation List

### Patent Literature

PTL 1: JP2010-184454A
PTL 2: JP2011-093315A

### Summary of Invention

### Technical Problem

An object of the present invention is to provide an adhesive tape that ensures sufficient adhesion to a water-repellent surface having a contact angle with pure water of 140 degrees or more even by an instantaneous slapping motion, and that prevents its adhesive from adhering to cutters during processing (cutting, punching, etc.).

### Solution to Problem

As a result of intensive studies to achieve the above object, the present inventors found that the above object can be achieved by an adhesive tape according to claim 1 having a specific layer structure. The present invention has thus been completed.

More specifically, the present invention relates to the following adhesive tape:
1. An adhesive tape used for bonding to a water-repellent surface of a packaging material, the water-repellent surface having a contact angle with pure water of 140 degrees or more;
   (1) the adhesive tape comprising a base material layer made of a foam, and a natural rubber-based adhesive layer;
   (2) the base material layer having a density of 0.38 g/cm³ or less and a thickness of 1 mm or less; and
   (3) the natural rubber-based adhesive layer having:
      (i) a weight per unit area of 35 g/m² to 65 g/m²;
      (ii) a ball number of 10 or more in a ball tack test specified in JIS Z0237; and
      (iii) a holding power of 100 seconds or more in a holding power test specified in JIS Z0237.
2. The adhesive tape according to item 1, wherein the base material layer has a pressure required for 50% compression in the thickness direction of 0.03 MPa or less, and an impact-absorbing value measured by an acceleration sensor of 400 to 700 m/s².
3. The adhesive tape according to item 1 or 2, wherein the natural rubber-based adhesive layer contains 100 parts by weight of natural rubber, 10 to 50 parts by weight of a tackifier resin that is solid at room temperature, and 100 to 150 parts by weight of a rosin ester that is liquid at room temperature.
4. The adhesive tape according to any one of items 1 to 3, wherein the solid tackifier resin is at least one of rosin and modified rosin.
5. The adhesive tape according to any one of items 1 to 4, which comprises an intermediate resin layer between the base material layer and the natural rubber-based adhesive layer.
6. The adhesive tape according to any one of items 1 to 5, which comprises a mold-releasing film for protecting the natural rubber-based adhesive layer.

The adhesive tape of the present invention is described in detail below.

The adhesive tape of the present invention is used for bonding to a water-repellent surface of a packaging material, the water-repellent surface having a contact angle with pure water of 140 degrees or more;
(1) the adhesive tape comprising a base material layer made of a foam, and a natural rubber-based adhesive layer;
(2) the base material layer having a density of 0.38 g/cm³ or less and a thickness of 1 mm or less; and
(3) the natural rubber-based adhesive layer having:
   (i) a weight per unit area of 35 g/m² to 65 g/m²;
   (ii) a ball number of 10 or more in a ball tack test specified in JIS Z0237; and
   (iii) a holding power of 100 seconds or more in a holding power test specified in JIS Z0237.

Due to the requirements (1) to (3), the adhesive tape of the present invention having the above features exhibits excellent adhesion to a water-repellent surface of a packaging material, the water-repellent surface having a contact angle with pure water of 140 degrees or more. In particular, the adhesive tape of the present invention can be suitably used when stock rolls of packaging material having a water-repellent surface with a contact angle with pure water of 140 degrees or more are continuously processed in a production line of packing items, because sufficient adhesion is obtained even by an instantaneous slapping motion, and the adhesive is prevented from adhering to cutters during processing (cutting, punching, etc.).

The layers constituting the adhesive tape of the present invention are each described below.

### Base Material Layer Made of Foam

In the adhesive tape of the present invention, the base material layer made of foam has a density of 0.38 g/cm³ or less and a thickness of 1 mm or less.

The density of the base material layer may be 0.38 g/cm³ or less, and particularly preferably in the range of 0.28 to 0.38 g/cm³. When the density is set within the above range, moderate cushioning properties are imparted to the adhesive tape so that the adhesive tape can be bonded to a water-repellent surface even by an instantaneous slapping motion.

The thickness of the base material layer may be 1 mm or less, particularly preferably in the range of 0.3 to 1 mm, and more preferably in the range of 0.5 to 0.9 mm. When the thickness is less than 0.3 mm, the cushioning properties are poor, and a high repulsive force generated by an instantaneous slapping motion may reduce adhesion. When the thickness exceeds 1 mm, the strength of the base material layer is lowered, consequently reducing adhesion.

Moreover, the base material layer preferably has a pressure required for 50% compression in the thickness direction of 0.03 MPa or less, and particularly more preferably in the range of 0.001 to 0.03 MPa. When the pressure is set within this range, the cushioning properties can be easily obtained.

Furthermore, the base material layer preferably has an impact-absorbing value measured by an acceleration sensor of 400 to 700 m/s², and particularly more preferably in the range of 500 to 650 m/s². An impact-absorbing value out of this range may lead to an imbalance between this value and the impact-absorbing value of the natural rubber-based adhesive, making it difficult to ensure adhesion to a water-repellent surface by an instantaneous slapping motion. The impact-absorbing value measured by an acceleration sensor in the present specification was measured by a MODEL-1340A accelerometer (produced by Showa Measuring Instruments Co., Ltd.).

The material of the base material layer is not limited as long as it satisfies the above physical properties. Examples thereof include polyethylene cloth sheets, polyurethane foam sheets, polyolefin foam sheets, acrylic foam sheets, acrylic foam sheets containing hollow glass beads, and the like. These sheets can be used singly or in a lamination of two or more layers. In the present invention, particularly preferred among these materials is at least one of an acrylic foam sheet and an acrylic foam sheet containing hollow glass beads.

### Natural Rubber-based Adhesive Layer (Adhesive Layer to Be Bonded to Water-repellent Surface)

In the adhesive tape of the present invention, the natural rubber-based adhesive layer is an adhesive layer to be bonded to a water-repellent surface. In particular, the adhesive layer has:
(i) a weight per unit area of 35 g/m² to 65 g/m²;
(ii) a ball number of 10 or more in a ball tack test specified in JIS Z0237; and
(iii) a holding power of 100 seconds or more in a holding power test specified in JIS Z0237.

The weight per unit area is measured after a natural rubber-based adhesive composition is applied to the base material layer made of foam or an intermediate resin layer, described later, followed by drying (at 80°C for about 4 minutes) to remove the solvent in the composition. The weight may be 35 g/m² to 65 g/m², and particularly preferably 40 g/m² to 50 g/m².

Since the object of the adhesive tape of the present invention is to bond to a water-repellent surface having a contact angle with pure water of 140 degrees or more, the adhesion of the natural rubber-based adhesive layer is required to have a ball number of 10 or more, particularly preferably in the range of 15 to 25, in a ball tack test specified in JIS Z0237. However, it is not that excellent adhesion to a water-repellent surface is obtained simply when the ball number is 10 or more; due to the combination with the density and thickness of the base material layer, adhesion to a water-repellent surface can be obtained even by an instantaneous slapping motion. The ball tack test in the present specification is specified in JIS Z0237, and shows the results measured at an inclined plate angle of 30 degrees.

The holding power may be 100 seconds or more in a holding power test specified in JIS Z0237, and particularly preferably in the range of 120 to 300 seconds. The holding power is the time of adherence retention to a stainless plate, which is a test plate, in a 40°C atmosphere.

When the physical properties of the natural rubber-based adhesive layer are determined as described above, excellent adhesion to a water-repellent surface is obtained. Further, the adhesive is prevented from adhering to cutters during processing (cutting, punching, etc.), and the sharpness of the cutters can be retained. Thus, the adhesive tape of the present invention is suitable for the continuous production of packaging materials.

The natural rubber-based adhesive layer is not limited as long as it contains natural rubber and has the above physical properties. For example, a layer containing natural rubber, a tackifier resin that is solid at room temperature, and a rosin ester that is liquid at room temperature is preferred. Room temperature means 20°C. The natural rubber-based adhesive layer may further contain known additives, such as an antioxidant, an ultraviolet absorber, a coloring agent, and an inorganic filler.

Natural rubber has excellent compatibility with a tackifier resin that is solid at room temperature and a rosin ester that is liquid at room temperature. The use of natural rubber is preferred because high adhesion is obtained immediately after the natural rubber-based adhesive is bonded to a water-repellent surface.

Examples of the tackifier resin that is solid at room temperature include natural resins and synthetic resins. Specific examples thereof include rosin, modified rosin, aliphatic hydrocarbon resins, aromatic hydrocarbon resins, and the like. Among these, at least one of rosin and modified rosin is particularly preferred. Preferable examples of modified rosin include glycerol ester of rosin, hydrogenated rosin ester, rosin ester, and the like.

Examples of the rosin ester that is liquid at room temperature include Super Ester L, Super Ester A-18, and Ester Gum AT (produced by Arakawa Chemical Industries, Ltd.), and the like.

The composition of the natural rubber-based adhesive layer preferably comprises 10 to 50 parts by weight (preferably 15 to 45 parts by weight) of a tackifier resin that is solid at room temperature, and 100 to 150 parts by weight (preferably 120 to 140 parts by weight) of a rosin ester that is liquid at room temperature, based on 100 parts by weight of natural rubber.

When the content of the tackifier resin that is solid at room temperature is less than 10 parts by weight or greater than 50 parts by weight, adhesion may be reduced. The content of the rosin ester that is liquid at room temperature is very important in the present invention. When this content is set within the range of 100 to 150 parts by weight, excellent adhesion to a water-repellent surface is obtained even by an instantaneous slapping motion, and the adhesive is prevented from adhering to cutters during processing (cutting, punching, etc.). Thus, the adhesive tape of the present invention is suitable for the continuous production of packing items.

The natural rubber-based adhesive layer can be formed by applying a natural rubber-based adhesive composition containing the above components and an organic solvent, followed by drying. Examples of organic solvents include toluene, hexane, heptane, cyclohexane, methylcyclohexane, ethylcyclohexane, ethyl acetate, propyl acetate, methyl ethyl ketone, acetone, methylene chloride, etc., which can be used singly or in a combination of two or more.

Examples of the coating method of a natural rubber-based adhesive composition include a roll coater, flow coater, spray coater, curtain flow coater, comma coater, dip coater, slit-die coater, and other known methods. During coating, the viscosity, temperature, etc., of the composition can be suitably adjusted depending on the size of the base material layer, the coating amount, the coating method, etc. Although the drying conditions after coating are not limited, preferred conditions are 80°C for about 4 minutes.

### Intermediate Resin Layer

The adhesive tape of the present invention may comprise an intermediate resin layer, if necessary, between the base material layer and the natural rubber-based adhesive layer. An intermediate resin layer may be formed, for example, when it is difficult to directly form a natural rubber-based adhesive layer, or when it is difficult to form a natural rubber-based adhesive layer with a uniform thickness, depending on the type of base material layer. The intermediate resin layer may be a mono- or multi-layered resin film. The resin film may be bonded to the base material layer with an adhesive, etc., or may be bonded by integral molding, welding, etc., without using an adhesive.

Examples of the resin film forming an intermediate resin layer include polyester films, such as polyethylene terephthalate (PET), polypropylene terephthalate, polyethylene naphthalate, polypropylene naphthalate, and polycarbonate; polyethylene films, polypropylene films, cellophane, diacetyl cellulose films, triacetyl cellulose films, acetyl cellulose butyrate films, polyvinyl chloride films, polyvinylidene chloride films, polyvinyl alcohol films, ethylene-vinyl acetate copolymer films, polystyrene films, polycarbonate films, polymethylpentene films, polysulfone films, polyether ether ketone films, polyether sulfone films, polyether imide films, fluororesin films, polyamide films, acrylic resin films, urethane resin films, norbornene-based polymer films, cyclic olefin-based polymer films, cyclic conjugated diene-based polymer films, vinyl alicyclic hydrocarbon polymer films, and the like. These resin films can be used singly or in a lamination of two or more. Further, paper, metal foil, non-woven fabric, or the like can be used in combination with the resin film, if necessary.

The thickness of the resin film is not restrictive, but is about 9 to 50 µm. Moreover, one or both sides of the resin film may be subjected to priming or surface treatment by an oxidation method or a roughening method, so as to enhance bonding strength. Examples thereof include corona discharge treatment, chromic acid treatment, flame treatment, ozonation treatment, ultraviolet treatment, sandblasting, solvent processing, and the like.

### Mold-releasing Film

The adhesive tape of the present invention may comprise a mold-releasing film for protecting the natural rubber-based adhesive layer. The mold-releasing film is removed to expose the natural rubber-based adhesive layer just before the adhesive tape is used.

As the mold-releasing film, for example, a polyethylene terephthalate film coated with silicone resin or fluororesin can be used. The type and thickness of the mold-releasing film can be suitably adjusted depending on the type of adhesive tape.

### Another Adhesive Layer

The adhesive tape of the present invention may comprise another adhesive layer on the surface opposite to the surface on which the natural rubber-based adhesive layer is formed. When another adhesive layer is formed, the adhesive tape of the present invention can be used as a double-sided tape.

The type of another adhesive layer may be determined depending on the type of the object to be bonded. For example, the adhesive layer can be formed from a commercially available acrylic-based adhesive. When an object to be bonded has a water-repellent surface, the natural rubber-based adhesive layer may be used as another adhesive layer, as a matter of course.

Moreover, another adhesive layer may be formed directly on the base material layer, or via an intermediate resin layer, as described above.

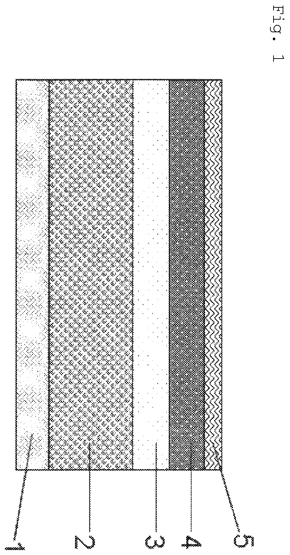

Fig. 1 shows an example of the layer structure of the adhesive tape of the present invention. In Fig. 1, an intermediate resin layer 3, a natural rubber-based adhesive layer 4, and a mold-releasing film 5 are laminated on a base material layer 2 made of a foam, and another adhesive layer 1 is laminated below the base material layer 2.

### Usage Form for the Adhesive Tape of the Present Invention

The adhesive tape of the present invention can exhibit excellent adhesion to a water-repellent surface of a packaging material, the water-repellent surface having a contact angle with pure water of 140 degrees or more. Moreover, sufficient adhesion can be obtained even by an instantaneous slapping motion, and the adhesive is prevented from adhering to cutters during processing (cutting, punching, etc.). Therefore, the adhesive tape of the present invention can be suitably used in the production process of packaging materials (containers, lids, bags, etc.) having a water-repellent surface.

For example, a packing item having a packaging material (container, lid, bag, etc.) with a water-repellent surface is produced by processing (cutting, molding, punching, etc.) a stock roll of packaging material wound in a coil shape while continuously drawing out the stock roll in the production line. When the adhesive tape of the present invention is used in such a production line, the rear end of a coil being drawn and the front end of the next coil can be bonded by an instantaneous slapping motion; thus, it is not necessary to stop the production line when the coils are replaced, and the stock rolls of packaging material can be efficiently and continuously supplied to the production line.

As described above, the present invention specifically includes the following inventions:
(A) A method for supplying stock rolls of packaging material having a water-repellent surface with a contact angle with pure water of 140 degrees or more wound in a coil shape by continuously drawing the stock rolls, wherein the rear end of the coiled stock roll of packaging material being drawn and the front end of the next (another) coiled stock roll of packaging material are bonded together with the adhesive tape of the present invention, thereby continuously supplying the stock rolls of packaging material while drawing the stock rolls over a plurality of coils (without stopping the production line).
(B) Use of the adhesive tape of the present invention in the process of bonding together packaging materials having a water-repellent surface with a contact angle with pure water of 140 degrees or more.

### Advantageous Effects of Invention

Due to the above-mentioned requirements (1) to (3), the adhesive tape of the present invention exhibits excellent adhesion to a water-repellent surface of a packaging material, the water-repellent surface having a contact angle with pure water of 140 degrees or more. In particular, the adhesive tape of the present invention can be suitably used when stock rolls of packaging material having a water-repellent surface with a contact angle with pure water of 140 degrees or more are continuously processed in a production line of packing items, because sufficient adhesion is obtained even by an instantaneous slapping motion, and the adhesive is prevented from adhering to cutters during processing (cutting, punching, etc.).

### Brief Description of Drawings

Fig. 1 is a cross-sectional view showing one embodiment of the layer structure of the adhesive tape of the present invention.

### Description of Embodiments

The present invention is described in detail below with reference to Examples, Comparative Examples, and a Test Example. However, the present invention is not limited to the scope of the Examples.

### Preparation of Natural Rubber-based Solvent-type Adhesive A

Natural rubber (100 parts by weight) was kneaded with a roll and then cut. The cut natural rubber (100 parts by weight), 15 parts by weight of Neotall 85 (produced by Harima Chemicals, Inc.; glycerol ester of rosin that is solid at room temperature), and 100 parts by weight of Super Ester AT (produced by Arakawa Chemical Industries, Ltd.; rosin ester that is liquid at room temperature) were dissolved in 645 parts by weight of toluene, thereby obtaining an adhesive having a viscosity of 4,210 mPa·s.

### Preparation of Natural Rubber-based Solvent-type Adhesive B

Natural rubber (100 parts by weight) was kneaded with a roll and then cut. The cut natural rubber (100 parts by weight), 25 parts by weight of Ester Gum HP (produced by Arakawa Chemical Industries, Ltd.; hydrogenated rosin ester that is solid at room temperature), and 130 parts by weight of Super Ester A-18 (produced by Arakawa Chemical Industries, Ltd.; rosin ester that is liquid at room temperature) were dissolved in 765 parts by weight of toluene, thereby obtaining an adhesive having a viscosity of 2,110 mPa·s.

### Preparation of Natural Rubber-based Solvent-type Adhesive C

Natural rubber (100 parts by weight) was kneaded with a roll and then cut. The cut natural rubber (100 parts by weight), 50 parts by weight of Ester Gum A (produced by Arakawa Chemical Industries, Ltd.; rosin ester that is solid at room temperature), and 150 parts by weight of Super Ester L (produced by Arakawa Chemical Industries, Ltd.; rosin ester that is liquid at room temperature) were dissolved in 900 parts by weight of toluene, thereby obtaining an adhesive having a viscosity of 2,000 mPa·s.

### Preparation of Natural Rubber-based Solvent-type Adhesive D

Natural rubber (100 parts by weight) was kneaded with a roll and then cut. The cut natural rubber (100 parts by weight), 60 parts by weight of Ester Gum A (produced by Arakawa Chemical Industries, Ltd.; rosin ester that is solid at room temperature), and 80 parts by weight of Super Ester L (produced by Arakawa Chemical Industries, Ltd.; rosin ester that is liquid at room temperature) were dissolved in 720 parts by weight of toluene, thereby obtaining an adhesive having a viscosity of 2,650 mPa·s.

### Preparation of Acrylic Foam Sheet I

An acrylic foam sheet having a thickness of 0.3 mm (thickness in the final adhesive tape: 0.2 mm), a density of 0.29 g/cm³, an impact-absorbing value measured by an acceleration sensor of 700 m/s², and a repulsive force at 50% compression of 0.01 MPa was prepared as sheet I.

### Preparation of Acrylic Foam Sheet II

An acrylic foam sheet having a thickness of 0.6 mm (thickness in the final adhesive tape: 0.5 mm), a density of 0.34 g/cm³, an impact-absorbing value measured by an acceleration sensor of 500 m/s², and a repulsive force at 50% compression of 0.02 MPa was prepared as sheet II.

### Preparation of Acrylic Foam Sheet III

An acrylic foam sheet having a thickness of 1.0 mm (thickness in the final adhesive tape: 0.9 mm), a density of 0.38 g/cm³, an impact-absorbing value measured by an acceleration sensor of 400 m/s², and a repulsive force at 50% compression of 0.03 MPa was prepared as sheet III.

### Preparation of Acrylic Foam Sheet IV

An acrylic foam sheet having a thickness of 0.6 mm (thickness in the final adhesive tape: 0.5 mm), a density of 0.35 g/cm³, an impact-absorbing value measured by an acceleration sensor of 600 m/s², and a repulsive force at 50% compression of 0.04 MPa was prepared as sheet IV.

### Production of Water-repellent Lid Material

A water-repellent lid material was produced according to Example 5 of JP2011-93315A.

Front printing and an OP coat (cellulose-based overprint coat) were applied to one side of a paper having a basis weight of 55 g/m², and the other side was bonded to the evaporated surface of an aluminum-evaporated polyethylene terephthalate film (abbreviated as "AL-evaporated PET") having a thickness of 16 µm using a polyurethane-based dry laminate adhesive (weight after drying: 3.5 g/m²; abbreviated as "D").

Further, as a thermoplastic resin layer, a heat seal lacquer (main components: 160 parts by weight of polyester-based resin + 10 parts by weight of acrylic resin + 40 parts by weight of solvent (mixed solvent of toluene and MEK); abbreviated as "lacquer") containing 10 parts by weight of acrylic resin beads (mean particle diameter: 30 µm; produced by Sekisui Plastics Co., Ltd.) was applied to the polyethylene terephthalate film of the bonded material so that the weight after drying was about 3 g/m² (drying conditions: 150°C x 10 seconds). Thereby, a laminate having a structure of "OP/printing/paper/D/AL-evaporated PET/lacquer" was obtained.

Hydrophobic oxide particles (5 g; product name: "AEROSIL R812S," produced by Evonik Degussa GmbH; BET specific surface area: 220 m²/g, primary particle mean diameter: 7 nm) were dispersed in 100 mL of ethanol, thereby preparing a coating liquid. The coating liquid was applied to the thermoplastic resin layer surface of the above-produced laminate by a bar coat method so that the weight after drying was 0.4 g/m², followed by drying at 100°C for about 10 seconds to evaporate the ethanol, thereby obtaining a water-repellent lid material.

The structure of the layer comprising the hydrophobic oxide particles in the water-repellent lid material was observed by FE-SEM. As a result, a porous layer having a three-dimensional network structure made of the hydrophobic oxide particles was observed.

The thermoplastic resin layer side of the water-repellent lid material was used as a test surface. The water-repellent lid material was fixed with a clip on a horizontal table with the test surface facing up. One drop (approximately 0.4 g) of commercially available yoghurt (product name: "Delicious Caspian Sea" soft yogurt, produced by Glico Dairy Products Co., Ltd.) was dropped from a close distance, and the horizontal table was inclined. It was confirmed that the yoghurt droplet rolled off.

Further, using the thermoplastic resin layer side of the water-repellent lid material as a test surface, the contact angle with pure water was measured by a contact angle measurement device (a "Drop Master 300 solid-liquid-interface analyzer," produced by Kyowa Interface Science Co., Ltd.). The result was 150 degrees or more.

### Example 1

The acrylic foam sheet I was laminated on a 25-µm-thick PET film (both sides treated with corona discharge), and cured and bonded together at a drying temperature of about 120 to 140°C. The natural rubber-based solvent-type adhesive A was applied to the PET surface of the bonded body so that the coating weight after drying was 60 g/m², followed by drying at 80°C for about 4 minutes, thereby producing an adhesive tape having a total thickness of about 0.2 mm.

### Example 2

The acrylic foam sheet II was laminated on a 25-µm-thick PET film, and cured and bonded together at a drying temperature of about 120 to 140°C. The natural rubber-based solvent-type adhesive B was applied to the PET surface of the bonded body so that the coating weight after drying was 50 g/m², followed by drying at 80°C for about 4 minutes, thereby producing an adhesive tape having a total thickness of about 0.5 mm.

### Example 3

The acrylic foam sheet III was laminated on a 25-µm-thick PET film, and cured and bonded together at a drying temperature of about 120 to 140°C. The natural rubber-based solvent-type adhesive B was applied to the PET surface of the bonded body so that the coating weight after drying was 40 g/m², followed by drying at 80°C for about 4 minutes, thereby producing an adhesive tape having a total thickness of about 0.9 mm.

### Example 4

The acrylic foam sheet II was laminated on a 25-µm-thick PET film, and cured and bonded together at a drying temperature of about 120 to 140°C. The natural rubber-based solvent-type adhesive C was applied to the PET surface of the bonded body so that the coating weight after drying was 60 g/m², followed by drying at 80°C for about 4 minutes, thereby producing an adhesive tape having a total thickness of about 0.5 mm.

### Example 5

The acrylic foam sheet II was laminated on a 25-µm-thick PET film, and cured and bonded together at a drying temperature of about 120 to 140°C. The natural rubber-based solvent-type adhesive C was applied to the PET surface of the bonded body so that the coating weight after drying was 50 g/m², followed by drying at 80°C for about 4 minutes, thereby producing an adhesive tape having a total thickness of about 0.5 mm.

### Comparative Example 1

The acrylic foam sheet II was laminated on a 25-µm-thick PET film, and cured and bonded together at a drying temperature of about 120 to 140°C. The natural rubber-based solvent-type adhesive D was applied to the PET surface of the bonded body so that the coating weight after drying was 60 g/m², followed by drying at 80°C for about 4 minutes, thereby producing an adhesive tape having a total thickness of about 0.5 mm.

### Comparative Example 2

The acrylic foam sheet II was laminated on a 25-µm-thick PET film, and cured and bonded together at a drying temperature of about 120 to 140°C. The natural rubber-based solvent-type adhesive B was applied to the PET surface of the bonded body so that the coating weight after drying was 70 g/m², followed by drying at 80°C for about 4 minutes, thereby producing an adhesive tape having a total thickness of about 0.5 mm.

### Comparative Example 3

The acrylic foam sheet IV was laminated on a 25-µm-thick PET film, and cured and bonded together at a drying temperature of about 120 to 140°C. The natural rubber-based solvent-type adhesive C was applied to the PET surface of the bonded body so that the coating weight after drying was 70 g/m², followed by drying at 80°C for about 4 minutes, thereby producing an adhesive tape having a total thickness of about 0.5 mm.

### Comparative Example 4

A commercially available urethane foam sheet having a thickness of 0.6 mm, a density of 0.48 g/cm³, a repulsive force at 50% compression of 0.20 MPa, and an impact-absorbing value measured by an acceleration sensor of 170 m/s² was laminated on a 25-µm-thick PET film, and cured and bonded together at a drying temperature of about 120 to 140°C. The natural rubber-based solvent-type adhesive C was applied to the PET surface of the bonded body so that the coating weight after drying was 50 g/m², followed by drying at 80°C for about 4 minutes, thereby producing an adhesive tape having a total thickness of about 0.5 mm.

### Test Example 1

- Impact-absorbing value: An iron ball having a weight of 88 g (including a guide bar) was allowed to fall naturally from a height of 40 mm toward a sample (sheet) placed on a 2-mm-thick SUS steel plate, and the impact acceleration (m/s²) was measured using a digital accelerometer (MODEL-1340A, produced by Showa Measuring Instruments Co., Ltd.). The measured results were used as impact-absorbing values.
- Ball tack: Measured according to JIS Z0237, with a proviso that the sample size was 50 mm x 250 mm, N = 2, and the inclination angle was 30 degrees.
- Holding power: Measured according to JIS Z0237, with a proviso that the sample size was 25 mm x 125 mm, N = 2, the contact area was 25 mm x 25 mm, and the sample was compression-bonded to an SUS steel plate by reciprocating a 2-kg roller once at a speed of 300 mm/min. Then, a load of 1 kg was applied in a 40°C atmosphere, and the time (in seconds) to peeling was measured.
- Density of base material: A sample was cut into a 100 mm x 100 mm square. The thickness of the sample was measured with a dial gauge, the weight was measured with an electronic balance, and the density was calculated from the thickness and weight.
- Pressure (repulsive force) at 50% compression: The size of a measuring sample was 10 mm (thickness) x 60 mm (length) x 60 mm (width). The pressure was determined from the load at a strain rate of 10 mm/min and at 50% compression (5-mm-thick state) using an autograph (produced by Shimadzu Corp.).

### Production of Double-sided Adhesive Tape

A commercially available acrylic-based adhesive was applied to the base-material side of each of the adhesive tapes produced in the above Examples and Comparative Examples so that the weight after drying was 20 g/m², thereby producing double-sided adhesive tapes.
- Peel bonding strength: Two water-repellent lid materials (25 mm (width) x 200 mm (length)) were prepared. The acrylic-based adhesive side of the double-sided adhesive tape (25 mm (width) x 50 mm (length)) was bonded to the OP-coated surface side of one water-repellent lid material, and the natural rubber-based adhesive side of the double-sided adhesive tape was bonded to the water-repellent surface of the other water-repellent lid material. The bonding was performed as naturally as possible without applying pressure. After holding for 10 seconds, the load when the water-repellent lid material on the acrylic-based adhesive side was folded in the 180-degree direction and manually peeled at about 150 mm/min was measured by a push pull gauge (produced by Imada Co., Ltd.).
- Adhesion to water-repellent surface: The state of the base material in the portion in which the lid material was peeled in the measurement of peel bonding strength.
- Punching properties (production-line compatibility): The state of a sample for measuring peel bonding strength when the sample was cut continuously (about 20 times) with commercially available scissors at an interval of 3 to 5 mm.
   ++: the sample could be cut without the scissors becoming sticky.
   +: the sample could be cut, although the scissors became sticky.
   -: the adhesive stuck to the scissors, and the sample could not be cut halfway.

**Table 1**

| | | Ex. 1 | Ex. 2 | Ex. 3 | Ex. 4 | Ex. 5 | Comp. Ex. 1 | Comp. Ex. 2 | Comp. Ex. 3 | Comp. Ex. 4 |
|---|---|---|---|---|---|---|---|---|---|---|
| Base material layer | Material | Acrylic foam I | Acrylic foam II | Acrylic foam III | Acrylic foam II | Acrylic foam II | Acrylic foam II | Acrylic foam II | Acrylic foam IV | Urethane foam |
| | Shape | Foam | Foam | Foam | Foam | Foam | Foam | Foam | Foam | Foam |
| | Thickness before use (mm) | 0.3 | 0.6 | 1.0 | 0.6 | 0.6 | 0.6 | 0.6 | 0.6 | 0.6 |
| | Density (g/cm³) | 0.29 | 0.34 | 0.38 | 0.34 | 0.34 | 0.34 | 0.34 | 0.35 | 0.48 |
| | Impact-absorbing value (m/s²) | 700 | 500 | 400 | 500 | 500 | 500 | 500 | 600 | 170 |
| | Pressure at 50% compression (MPa) | 0.01 | 0.02 | 0.03 | 0.02 | 0.02 | 0.02 | 0.02 | 0.04 | 0.2 |
| | | Low | Standard | Maximum | Standard | Standard | Standard | Standard | Out of range | Out of range |
| Intermediate resin layer | Material | PET | PET | PET | PET | PET | PET | PET | PET | PET |
| | Thickness (µm) | 25 | 25 | 25 | 25 | 25 | 25 | 25 | 25 | 25 |
| | Corona discharge treatment | Both sides treated | Both sides treated | Both sides treated | Both sides treated | Both sides treated | Both sides treated | Both sides treated | Both sides treated | Both sides treated |
| Natural rubber-based adhesive | Composition | Natural rubber-based solvent-type A | Natural rubber-based solvent-type B | Natural rubber-based solvent-type B | Natural rubber-based solvent-type C | Natural rubber-based solvent-type C | Natural rubber-based solvent-type D | Natural rubber-based solvent-type B | Natural rubber-based solvent-type C | Natural rubber-based solvent-type C |
| | Coating amount (g/m²) | 60 | 50 | 40 | 60 | 50 | 60 | 70 | 70 | 50 |
| | | Maximum | Standard | Minimum | Maximum | Standard | Maximum | Out of range | Out of range | Standard |
| Thickness of base material layer in adhesive tape (mm) | | 0.2 | 0.5 | 0.9 | 0.5 | 0.5 | 0.5 | 0.5 | 0.5 | 0.5 |
| | | Minimum | Standard | Maximum | Standard | Standard | Standard | Standard | Standard | Standard |
| Performance of adhesive tape | Holding power at 40°C (second) | 161 | 178 | 178 | 198 | 198 | 301 or more | 178 | 198 | 198 |
| | Ball tack (No.) | 15 | 23 | 23 | 16 | 16 | 8 out of range | 23 | 16 | 16 |
| | Peel bonding strength (N/25 mm width) | 7.8 | 8.0 | 8.0 | 7.8 | 8.5 | 2.0 | 2.0 | 1.5 | 1.0 |
| | Adhesion to water-repellent surface | +++ Cohesion failure | +++ Cohesion failure | +++ Cohesion failure | +++ Cohesion failure | +++ Cohesion failure | - Interfacial peeling | +++ Cohesion failure | - InterFacial peeling | - Interfacial peeling |
| | Punching properties (production-line compatibility) | + | ++ | ++ | + | ++ | + | - | - | ++ |

1. Another adhesive layer
2. Base material layer made of foam
3. Intermediate resin layer
4. Natural rubber-based adhesive layer
5. Mold-releasing film

## Claims

1. An adhesive tape used for bonding to a water-repellent surface of a packaging material, the water-repellent surface having a contact angle with pure water of 140 degrees or more;
(1) the adhesive tape comprising a base material layer made of foam, and a natural rubber-based adhesive layer;
(2) the base material layer having a density of 0.38 g/cm³ or less and a thickness of 1 mm or less;
(3) the natural rubber-based adhesive layer contains 100 parts by weight of natural rubber, 10 to 50 parts by weight of a tackifier resin that is solid at room temperature, and 100 to 150 parts by weight of a rosin ester that is liquid at room temperature; and
(4) the natural rubber-based adhesive layer having:
(i) a weight per unit area of 35 g/m² to 65 g/m²;
(ii) a ball number of 10 or more in a ball tack test specified in JIS Z0237; and
(iii) a holding power of 100 seconds or more in a holding power test specified in JIS Z0237.

2. The adhesive tape according to claim 1, wherein the base material layer has a pressure required for 50% compression in the thickness direction of 0.03 MPa or less, and an impact-absorbing value measured by an acceleration sensor of 400 to 700 m/s².

3. The adhesive tape according to any one of claims 1 to 2, wherein the solid tackifier resin is at least one of rosin and modified rosin.

4. The adhesive tape according to any one of claims 1 to 3, which comprises an intermediate resin layer between the base material layer and the natural rubber-based adhesive layer.

5. The adhesive tape according to any one of claims 1 to 4, which comprises a mold-releasing film for protecting the natural rubber-based adhesive layer.

## Patentansprüche

1. Haftklebeband, das zum Bondieren an eine wasserabweisende Oberfläche eines Verpackungsmaterials verwendet wird, wobei die wasserabweisende Oberfläche einen Kontaktwinkel mit reinem Wasser von 140 Grad oder mehr aufweist:
(1) wobei das Haftklebeband eine Basismaterialschicht, die aus Schaumstoff hergestellt ist, und eine Klebstoffschicht auf der Basis von Naturkautschuk umfasst;
(2) wobei die Basismaterialschicht eine Dichte von 0,38 g/cm³ oder weniger und eine Dicke von 1 mm oder weniger aufweist;
(3) wobei die Klebstoffschicht auf der Basis von Naturkautschuk 100 Gewichsteile Naturkautschuk, 10 bis 50 Gewichtsteile eines klebrigmachenden Harzes, das bei Raumtemperatur fest ist, und 100 bis 150 Gewichsteile eines Kolophoniumesters, der bei Raumtemperatur flüssig ist, enthält; und
(4) wobei die Klebstoffschicht auf der Basis von Naturkautschuk Folgendes aufweist:
(i) ein Gewicht pro Oberflächeneinheit von 35 g/m² bis 65 g/m²;
(ii) eine Anzahl von Kugeln von 10 oder mehr bei einem in JIS Z0237 angegebenen Kugel-Hafttest; und
(iii) eine Haltekraft über 100 Sekunden oder länger bei einem in JIS Z0237 angegebenen Haltekrafttest.

2. Haftklebeband nach Anspruch 1, wobei die Basismaterialschicht einen Druck, der für eine Komprimierung von 50 % in Dickenrichtung erforderlich ist, von 0,03 MPa oder weniger und einen durch einen Beschleunigungssensor gemessenen Pralldämpferwert von 400 bis 700 m/s² aufweist.

3. Haftklebeband nach einem der Ansprüche 1 bis 2, wobei das feste klebrigmachende Harz mindestens eines ist von Kolophonium und modifiziertem Kolophonium.

4. Haftklebeband nach einem der Ansprüche 1 bis 3, das eine Harzzwischenschicht zwischen der Basismaterialschicht und der Klebstoffschicht auf der Basis von Naturkautschuk umfasst.

5. Haftklebeband nach einem der Ansprüche 1 bis 4, das eine Formtrennfolie zum Schützen der Klebstoffschicht auf der Basis von Naturkautschuk umfasst.

## Revendications

1. Bande adhésive utilisée pour la liaison à une surface hydrofuge d'un matériau d'emballage, la surface hydrofuge présentant un angle de contact avec l'eau pure de 140 degrés ou plus;
(1) la bande adhésive comprenant une couche de matériau de base constituée de mousse, et une couche adhésive à base de caoutchouc naturel;
(2) la couche de matériau de base présentant une densité de 0,38 g/cm³ ou moins et une épaisseur de 1 mm ou moins;
(3) la couche adhésive à base de caoutchouc naturel contenant 100 parties en poids de caoutchouc naturel, 10 à 50 parties en poids d'une résine donnant du collant qui est solide à la température ambiante, et 100 à 150 parties en poids d'un ester de colophane qui est liquide à la température ambiante; et
(4) la couche adhésive à base de caoutchouc naturel présentant:
(i) un poids par surface unitaire de 35 g/m² à 65 g/m²;
(ii) un nombre de billes de 10 ou plus dans un test d'adhésivité de bille spécifié dans la norme JIS Z0237; et
(iii) une puissance de maintien de 100 secondes ou plus dans un test de puissance de maintien spécifié dans la norme JIS Z0237.

2. Bande adhésive selon la revendication 1, dans laquelle la couche de matériau de base présente une pression requise pour une compression à 50 % dans le sens de l'épaisseur de 0,03 MPa ou moins, et une valeur d'absorption de choc mesurée par l'intermédiaire d'un capteur d'accélération de 400 à 700 m/s².

3. Bande adhésive selon l'une quelconque des revendications 1 à 2, dans laquelle la résine solide donnant du collant est au moins l'un d'un colophane et d'un colophane modifié.

4. Bande adhésive selon l'une quelconque des revendications 1 à 3, qui comprend une couche de résine intermédiaire entre la couche de matériau de base et la couche adhésive à base de caoutchouc naturel.

5. Bande adhésive selon l'une quelconque des revendications 1 à 4, qui comprend un film de démoulage pour la protection de la couche adhésive à base de caoutchouc naturel.
